# EUROPEAN PATENT APPLICATION

(11) **EP 1 759 947 A2**
(43) Date of publication of application: **07.03.2007**
(21) Application number: 06253307.0
(22) Date of filing: 26.06.2006
(51) Int. Cl.: B60T 8/36, B60T 7/12

(54) **Rolling prevention device**

(30) Priority: 02.09.2005 KR 20050081572
(71) Applicant: Mando Corporation, Pyungtaek-City, Kyungki-Do (KR)
(72) Inventor: Hwang, Yong Suk, Gyeonggi-Do (KR)
(74) Representative: Pratt, David Martin

(57) **Abstract**

A rolling prevention device for vehicles including a solenoid valve (34) and relief valve (35) parallel to each other. The solenoid valve (34) and relief valve (35) are connected to at least one hydraulic circuit (33), which is adapted to receive a hydraulic pressure from a master cylinder (32) operated if a brake pedal (30) is pressed. The relief valve (35) has a valve seat (36) with a bypass (36b). The bypass (36b) can be processed with ease by forming a V-shaped groove in the outer diameter portion of the valve seat (36) or cutting and flattening a part of the outer diameter portion of the valve seat (36). Since a pressure in each wheel cylinder (38) is able to be gently lowered via the bypass (36b) even if the brake pedal (30) is released, a desired braking force can be maintained until a sufficient engine power is obtained, thus preventing unintentional rolling of a vehicle on a slope. The solenoid valve (34) and the relief valve (35) are provided in a modulator block comprising the hydraulic circuit (33).

## Description

### CROSS-REFERENCE TO RELATED APPLICATION

This application claims the benefit of Korean Patent Application No. 2005-0081572, filed on September 2, 2005 in the Korean Intellectual Property Office, the disclosure of which is incorporated herein by reference.

### BACKGROUND OF THE INVENTION

### 1. Field of the Invention

The present invention relates to a rolling prevention device for vehicles, and, more particularly, to a rolling prevention device which can provide a hydraulic circuit of an anti-lock brake system with functions of a solenoid valve, relief valve, and orifice, thereby preventing unintentional rolling of a vehicle due to absence of engine power when the vehicle restarts after temporarily stopping.

### 2. Description of the Related Art

Due to problems of environmental pollution and high oil prices, demand for hybrid vehicles, which use an electric battery engine and internal combustion engine together, is gradually increasing.

As known, hybrid vehicles have the effect of achieving an improvement in fuel efficiency by stopping operation of an internal combustion engine when the vehicle temporarily stops, and regulating an operation ratio of the electric battery engine to the internal combustion engine in accordance with a driving condition.

However, upon restarting of such a hybrid vehicle which temporarily stops on a slope, there is a problem in that the hybrid vehicle may unintentionally roll rearward because of temporary interruption of engine power to vehicle wheels. Of course, such an unintentional rolling phenomenon is also problematic in other general vehicles.

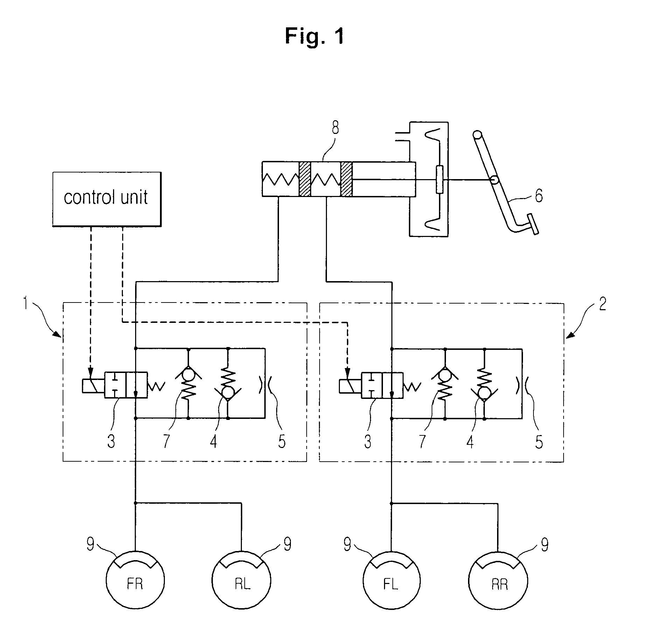

FIG. 1 is a hydraulic circuit diagram of a conventional rolling prevention device.

The conventional rolling prevention device shown in FIG. 1 is applied in a conventional anti-lock brake system including a first circuit 1 to control a braking operation of one of two systems and a second circuit 2 to control a braking operation of the other system. The conventional rolling prevention device includes a solenoid valve 3, relief valve 4 and orifice 5, which are connected to each of the first and second circuits 1 and 2 while being arranged parallel to one another.

In operation of the conventional rolling prevention device, when a vehicle temporarily stops, the solenoid valve 3, which is a normal open type, is operated to close a fluid path. If a brake pedal 6 is pressed, a pressure in a master cylinder 8 is transmitted to each wheel cylinder 9 by a check valve 7 to cause a braking operation. On the other hand, if the brake pedal 6 is released, a pressure in each wheel cylinder 9 is rapidly lowered until it reaches a preset pressure of the relief valve 4. Since the relief valve 4 is operated to close a fluid path if the pressure in each wheel cylinder 9 reaches the preset pressure, thereafter, the pressure in each wheel cylinder 9 is gently lowered via a bypass defined in the orifice 5 to achieve a gradual reduction in braking force, thereby preventing unintentional rearward rolling of a vehicle.

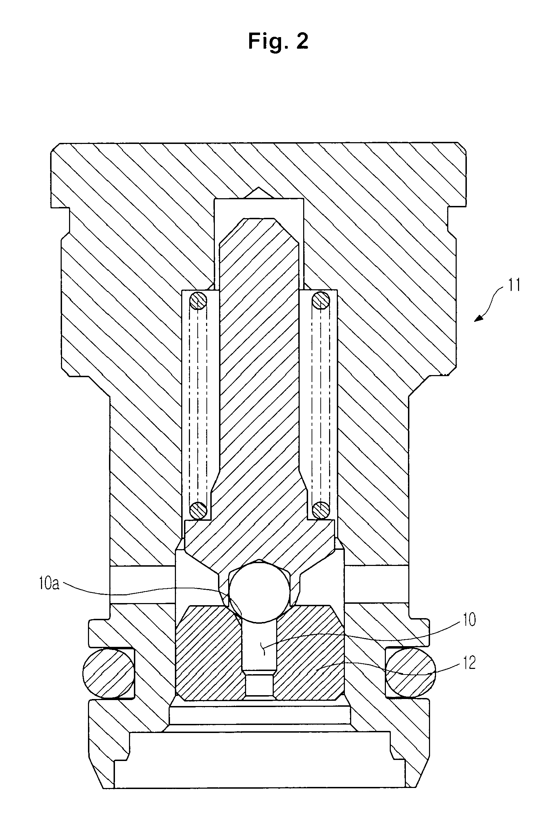

However, the conventional rolling prevention device has a problem in that, as shown in FIG. 2, a bypass 10a of an orifice 10 is formed at an inner surface of a valve sheet 12 included in a relief valve 11. Forming a groove at an inner-diameter portion has a difficulty in processing and also, complicates management such as measurement, etc. after processing.

Furthermore, the above described conventional rolling prevention device is problematic to be directly applied to anti-lock brake systems becoming increasingly common.

### SUMMARY OF THE INVENTION

The present invention has been made in order to solve the above problems. It is an aspect of the invention to provide a rolling prevention device which can achieve easy processing of an orifice and be easily applied to a hydraulic circuit of an anti-lock brake system.

Consistent with one aspect, an exemplary embodiment of the present invention provides a rolling prevention device for use with an anti-lock brake system comprising a brake pedal, a master cylinder to be operated if the brake pedal is pressed, at least one hydraulic circuit provided in a modulator block and adapted to receive a hydraulic pressure from the master cylinder, a controller to control the hydraulic circuit, and a plurality of wheel cylinders to receive the hydraulic pressure that is controlled in the hydraulic circuit, the rolling prevention device comprising: a solenoid valve installed between the master cylinder and the hydraulic circuit; and a relief valve arranged parallel to the solenoid valve and having a bypass formed at an outer diameter portion of a valve sheet, wherein the solenoid valve and relief valve are provided in the modulator block.

The solenoid valve may be operated based on a rolling prevention operating signal applied from the controller, and the relief valve may close an orifice at a preset pressure if the brake pedal is released, so as to lower the pressure in each wheel cylinder via the bypass.

Additional aspects and/or advantages of the invention will be set forth in part in the description which follows and, in part, will be obvious from the description, or may be learned by practice of the invention.

### BRIEF DESCRIPTION OF THE DRAWINGS

These and/or other aspects and advantages of the exemplary embodiments of the invention will become apparent and more readily appreciated from the following description of the embodiments, taken in conjunction with the accompanying drawings, of which:
FIG. 1 is a hydraulic circuit diagram of a conventional rolling prevention device;
FIG. 2 is a sectional view of a conventional relief valve;
FIG. 3 is a hydraulic circuit diagram of a rolling prevention device according to the present invention; and
FIG. 4 is a sectional view of a relief valve according to the present invention.

### DETAILED DESCRIPTION OF THE PREFERRED EMBODIMENTS

Reference will now be made in detail to a preferred exemplary embodiment of the present invention, an example of which is illustrated in the accompanying drawings. The embodiment is described below to explain the present invention by referring to the figures.

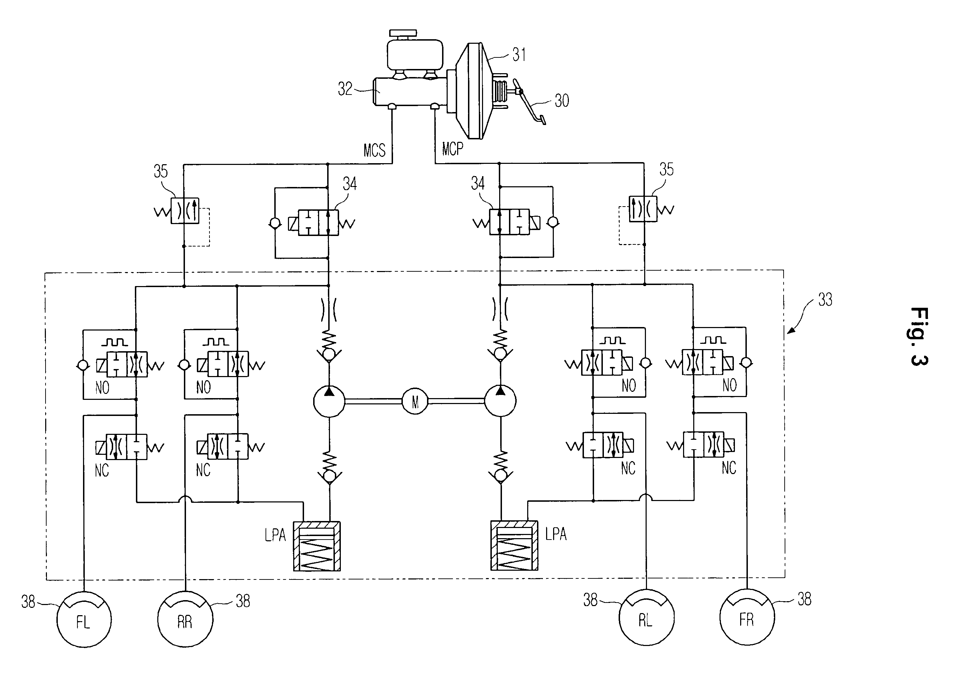

Referring to FIG 3, a rolling prevention device according to an embodiment of the present invention is illustrated which is preferable to be installed to each of two hydraulic circuits of a brake system. The two hydraulic circuits are equal to each other, and thus, hereinafter, only one of them will be described.

The present embodiment exemplifies the rolling prevention device applied to an anti-lock brake system, which includes a master cylinder 32 that is connected to a brake pedal 30 and brake booster 31, and a hydraulic circuit 33 having a normal open type solenoid valve, normal close type solenoid valve, hydraulic pump, and accumulator. The rolling prevention device is installed between the master cylinder 32 and the hydraulic circuit 33, and includes a normal open type solenoid valve 34 and a relief valve 35 which are arranged parallel to each other.

The hydraulic circuit 33 of the anti-lock brake system is provided in a modulator block (not shown) having a plurality of holes for the installation of respective valves and fluid paths. Herein, detailed description of the configuration and operation of the anti-lock brake system will be omitted.

Considering the rolling prevention device incorporated in the anti-lock brake system in detail, the relief valve 35 is configured such that a valve sheet 36 thereof has an orifice 36a and a bypass 36b formed separately from the orifice 36a. With this configuration, even if a fluid path of the relief valve 35, namely, the orifice 36a of the valve sheet 36, is closed when a hydraulic pressure reaches a preset pressure of the relief valve 35, the hydraulic pressure can be gently lowered below the preset pressure via the bypass 36b that is formed separately from the orifice 36a.

Specifically, if the hydraulic pressure in the relief valve 35 is lowered below the preset value, an armature 37 drops to close the orifice 36a of the valve sheet 36. However, in such as closed state of the orifice 36a, the bypass 36b allows gradual passage of brake fluid therethrough, thus achieving gentle lowering of the hydraulic pressure.

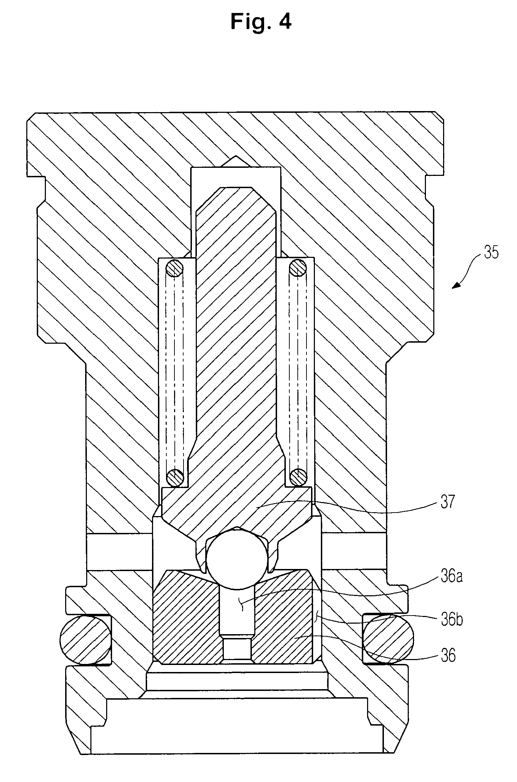

In the present invention, to process the bypass 36b in the valve sheet 36 with ease, as shown in FIG. 4, the bypass 36b is preferably formed at an outer diameter portion of the valve sheet 36. The bypass 36b may be obtained by forming a V-shaped groove in the outer diameter portion of the valve sheet 36 or cutting and flattening a part of the outer diameter portion.

Now, the operating procedure of the rolling prevention device having the above described configuration will be explained. First, if a controller (not shown) applies a rolling prevention operating signal to the normal open type solenoid valve 34, the normal open type solenoid valve 34 closes a fluid path. In this case, it is preferable that the operating signal be generated simultaneously with operation of the brake pedal 30.

Then, if the brake pedal 30 is released in a state wherein the normal open type solenoid valve 34 is closed based on the rolling prevention operating signal applied by the controller, the relief valve 35, which is connected with the normal open type solenoid valve 34 in parallel, is still opened until a pressure in each wheel cylinder 38 reaches a preset pressure of the relief valve 35. Thereafter, if the pressure in the wheel cylinder 38 is lowered below the preset pressure, the orifice 36a of the relief valve 35 is closed, thus causing the pressure in each wheel cylinder 38 to be gently lowered via the bypass 36b.

Accordingly, since the pressure in each wheel cylinder 38 is able to be gently lowered after exceeding the preset pressure even in a released state of the brake pedal, a desired braking force can be still maintained while brake fluid is discharged via the bypass 36b.

The rolling prevention device is preferable to be incorporated in the anti-lock brake system. For this reason, it is preferable that the controller to control the normal open type solenoid valve 34 is included in an ECU (not shown) to control the anti-lock brake system, and the normal open type solenoid valve 34, relief valve 35, and fluid paths thereof be included in the modulator block (not shown).

Although the above described rolling prevention function may be applied to general vehicles using an internal combustion engine, it can be said that the rolling prevention device is particularly useful in hybrid vehicles. In the case of hybrid vehicles, if an engine stops upon temporary stoppage of the vehicle, the hybrid vehicle may roll rearward due to absence of engine power in an initial stage of starting. However, with the use of the rolling prevention device, a pressure in each wheel cylinder can be gently lowered until a sufficient drive torque is generated by an engine, so as to provide the hybrid vehicle with a rolling prevention function.

As apparent from the above description, the rolling prevention device according to the present invention may be advantageously incorporated in an anti-lock brake system, and can achieve a rolling prevention function with a simplified configuration including a solenoid valve and relief valve.

Furthermore, as a result of forming a depressurizing bypass at an outer diameter portion of a valve sheet of the relief valve, the present invention can achieve easy processing of the bypass as compared to the prior art bypass as being formed in an inner diameter portion of a valve sheet. Such a bypass formed at the outer diameter portion results in ease in measurement of dimensions and a reduction in production costs.

Although embodiments of the present invention have been shown and described, it would be appreciated by those skilled in the art that changes may be made in this embodiment without departing from the principles and spirit of the invention, the scope of which is defined in the claims and their equivalents.

## Claims

1. A rolling prevention device for use with an anti-lock brake system comprising a brake pedal, a master cylinder to be operated if the brake pedal is pressed, at least one hydraulic circuit provided in a modulator block and adapted to receive a hydraulic pressure from the master cylinder, a controller to control the hydraulic circuit, and a plurality of wheel cylinders to receive the hydraulic pressure that is controlled in the hydraulic circuit, the rolling prevention device comprising:
a solenoid valve installed between the master cylinder and the hydraulic circuit; and
a relief valve arranged parallel to the solenoid valve and having a bypass formed at an outer diameter portion of a valve sheet,
wherein the solenoid valve and relief valve are provided in the modulator block.

2. The device according to claim 1, wherein:
the solenoid valve is operated based on a rolling prevention operating signal applied from the controller; and
the relief valve closes an orifice at a preset pressure if the brake pedal is released, so as to lower the pressure in each wheel cylinder via the bypass.
